# EUROPEAN PATENT SPECIFICATION

(11) **EP 2 183 173 B1**
(45) Date of publication and mention of the grant of the patent: **04.01.2012**
(21) Application number: 08750971.7
(22) Date of filing: 19.05.2008
(51) Int. Cl.: B65D 85/804, A47J 31/36

(54) **CONTAINER AND METHOD FOR PRODUCING AND CONSUMING SOLUBLE DRINKS**
BEHÄLTER UND VERFAHREN ZUM ERZEUGEN UND KONSUMIEREN VON LÖSLICHEN GETRÄNKEN
CONTENEUR ET PROCÉDÉ DE PRODUCTION ET DE CONSOMMATION DE BOISSONS SOLUBLES

(30) Priority: 25.05.2007 IT MO20070179
(43) Date of publication of application: 12.05.2010
(73) Proprietor: Pineschi, Massimiliano, 41100 Modena (MO) (IT)
(72) Inventor: Pineschi, Massimiliano, 41100 Modena (MO) (IT)
(74) Representative: Bergamini, Silvio
(86) International application number: PCT/IB2008/001233
(87) International publication number: WO 2008/146115

(56) References cited:
- WO-A-2004/087529
- DE-A1- 2 047 407

## Description

### TECHNICAL FIELD

The invention refers to an apparatus, container and method for producing and consuming soluble drinks.

### BACKGROUND ART.

For some time now, the use has been known of automatic machines able to prepare and dispense soluble drinks.

These machines comprise a solvent-liquid tank, generally water, which is heated and which, at command, is sent, by means of a pump and through a conveyor pipe, towards an area in which a number of capsules are placed containing doses of soluble substances in the form of powder which, mixed with the water, become consumable drinks.

The capsules are permeable to water and the mixing with the soluble substances occurs inside them during the transit of this.

The machines are equipped with a dispensing device underneath which an area is contemplated where the cups, or other containers, normally disposable, are placed to receive and contain the dispensed drinks and from which to drink them.

A capsule for containing soluble drinks is known by patent WO 2005/092160.

According to this patent, the capsule is made up of a lower cup portion forming a base with a dispensing mouth, and of an upper closing portion forming an inlet mouth for the solvent liquid.

Between the lower portion and the upper portion a containment chamber is defined in which is placed a dose of a soluble substance in the form of powder which is mixed with hot water under pressure and transformed by this into a drink that is then collected in an underlying cup.

A further capsule for containing soluble drinks is known by patent WO 2005/018395.

According to this patent, a capsule is contemplated which comprises a container body in which two superimposed chambers are defined.

The container body has an upper opening that is normally closed with a perforable diaphragm and an inner edge that delimits the two chambers and on which is fixed a second perforable diaphragm.

Between the two diaphragms a dose of soluble substance is contained, while, below the second diaphragm, the second chamber is formed which is provided, at the lower extremity, with a dispensing mouth.

The water under pressure is introduced into the first upper chamber by means of an injector unit of a dispenser machine, which perforates the first diaphragm and dispenses water under pressure.

Inside the first chamber, the pressure increases gradually and the second diaphragm is pushed onto the tips of the filtering element until this is perforated by these.

The dissolved drink flows through the filtering element and is then collected inside the second lower chamber and, from this, is dispensed outside through the dispensing mouth, which is formed of a series of openings such as to control the speed of drink dispensing.

A further capsule for containing soluble substances is known by patent WO 2004/087529 Al.

According to this patent, the capsule comprises a truncated-cone shaped body with an upper opening that is closed by means of a first sheet of plastic or aluminium material and which has a bottom wall with a section that re-enters the body.

Between the first sheet and the bottom wall, a first containment chamber is defined containing a dose of soluble substance.

This bottom wall forms a lower edge that delimits an opening with a width substantially the same as that of the body and which is also closed with a second sheet of plastic or aluminium material.

Between the bottom wall and the second sheet, a second chamber is defined underneath the first chamber.

The capsule is intended to be used in an automatic machine having an injection apparatus for injecting water under pressure.

This apparatus comprises an injector that perforates the first sheet, introduces water under pressure into the first chamber and then also perforates the second sheet.

The soluble substance dissolves inside the first chamber and collects in the second lower chamber, flowing through the holes obtained in the bottom wall and is therefore dispensed through the hole obtained in the second sheet.

Another capsule for containing soluble substances is known by the patent WO 2005/080223.

According to this patent, the capsule has a container body defining, inside, a containment chamber for containing a dose of soluble substance.

The container body has an upper opening that is sealed with a sheet of perforable material and a bottom defining a central area delimited by a predefined fracture line.

The capsule is used in drink dispenser machines having an injector unit that injects water under pressure into the containment chamber, after perforating the sheet of perforable material, and a pressing unit designed to push on the central area so this fractures and returns inside the chamber, leaving the central area open so that, through this, the drink can flow out.

The pressing unit has a part in contact with the central area and which has a predetermined section, so that, it too penetrating inside the chamber to a small extent, a passage of desired and variable dimensions for the drink is defined between it and the edges of the opening defined by the removal of the central area.

A further capsule for containing soluble substances to make drinks is known by US patent 2006/0236871.

According to this patent, the capsule comprises a container body for containing a dose of soluble substance.

The container body is shaped like a glass and has the upper extremity opened which is sealed with a sheet of perforable material and the lower extremity that can be completely closed or open in the centre, but sealed with a lower diaphragm of perforable material; between the upper extremity and the lower extremity is defined a containment chamber for containing a dose of soluble substance.

The capsule is made to be fitted in a seat of an automatic dispenser machine, which has an upper injector of water under pressure which, after perforating the sheet of perforable material that closes the upper extremity, positions inside the upper recess without tearing it and introduces water inside the containment chamber to dissolve the soluble substance through the openings obtained in the upper selector element.

The dispenser machine also has a lower hollow tip which, when the pressure inside the containment chamber increases and the lower extremity of the glass-shaped body bends outwards, is designed to perforate this lower extremity or, in a further version of the capsule, to perforate the lower diaphragm, positioning in the corresponding recess, without tearing it.

The dissolved drink flows through the openings obtained in the lower selector element and is dispensed outwards through an axial cavity on the lower tip.

A further embodiment of a pod for containing soluble substances is known by the patent WO 92/07775.

According to this patent, a pod is contemplated with a container body for containing a dose of a soluble substance.

The container body has a truncated-cone shape and is closed at the upper larger base by a convex wall outwards.

Similarly, the bottom of the container body is shaped like the upper convex wall and protrudes inside a containment chamber defined in the container body.

The latter has, substantially in a median area, a porous transversal diaphragm which is fixed around the perimeter of the inner wall of the container body.

The upper convex part has, centrally, a weakened area ready to be perforated by a perforating part fitted to a corresponding drink dispenser machine and which consists of an axially hollow needle which has gaps for dispensing water under pressure which are positioned so as to direct water jets onto the inner face of the upper wall that then spring off this towards all the areas of the containment chamber, so that the water can be distributed in a substantially uniform way in all these areas.

The dispenser machine, besides the perforating part as previously mentioned, also has a receptacle inside which the capsule must be placed in order to be used.

This receptacle comprises a second container body that is open at the top and which has a substantially truncated-cone shape like the body of the capsule, but slightly bigger so as to be able to contain it inside.

In turn, this second container body is housed in a collector device of the dispenser machine designed to collect the formed drink and convey this outside.

The bottom of this second container body has a series of perforators turned towards the bottom of the container body, which has a lower thickness than the walls, so that it can be easily perforated.

When the injector of the dispenser machine injects water under pressure inside the containment chamber, after perforating the upper wall, the pressure inside this chamber increases and the bottom wall bends outwards, entering into contact with the perforators of the second container body.

These perforators are axially hollow and, when they penetrate inside the containment chamber where, after the injection of water the liquid mix has formed that produces a drink, they allow this mix to flow and this is dispensed outside after passing through a filter located in the collector device.

Another capsule for containing soluble substances to make ready drinks is known by the patent WO 2006/045536.

According to this patent, the capsule comprises a container body inside which is defined a containment chamber of a dose of soluble substance.

This container body has a perforable extremity and an opposite base extremity that is open, but which is sealed with a sheet of perforable material after the capsule has been filled with the soluble substance.

The dispenser machine that uses this capsule has a supporting element for supporting the base extremity of the capsule, or, more specifically, of the sheet of perforable material that is normally kept bent outwards, by injecting a small volume of suitable gas.

The supporting element has a plurality of perforator elements designed to perforate the sheet when the drink is required to be dispensed.

The dispenser machine also comprises a bell-shaped body which is designed to couple up with the supporting element, superimposing itself on the capsule and which has, at the top of the inner wall, a perforator/injector linked with a dispensing channel of water under pressure and which is designed to inject water under pressure inside the containment chamber after perforating the perforable extremity.

When the dispensing is required of a drink inside the capsule, this is placed above the supporting element with the bell-shaped body in a position away from this to allow the positioning of the capsule.

Afterwards, a mechanism moves the bell-shaped body closer to the base element and the perforator/injector penetrates inside the containment chamber, injecting water under pressure into this

Inside the containment chamber, the pressure gradually increases and the sheet of perforable material bends towards the perforator elements which perforate it.

Among the perforator elements drink collection channels are defined that convey the drink towards a dispensing mouth towards the outside.

A further drink container is known from DE 2047407. According to said patent the drink container comprises an upper part having a bottom and a side wall.

In the bottom there is an opening which is shaped as a sector and which can be turned in order to be aligned with one of a plurality of compartments wherein a soluble and different powder of a drink is placed.

By introducing a liquid in the upper part of the container after having opened the selected compartment, the powder can be dissolved and beverage becomes ready to be drunk.

This state of the art has a series of drawbacks.

A first dxawback is that to be able to dispenser and consume a soluble drink a high number of components must be available that must be eliminated after use, such as, e.g., a container, an empty capsule inside which the wet powdered dose remains that generated the drink, a pack enclosing each capsule in a sealed way before this is used, the box containing the various capsule packs, the box containing the containers for the dispensed drinks.

Another drawback is that the dispenser machines must have a specific mechanism that captures the capsules to move them to the position of use and a duct and a tank for conveying and collecting the used capsules.

A further drawback is that unless the collection tank and the conveyor duct are repeatedly emptied, the dispenser machine stops, interrupting the production and the dispensing of drinks.

Another drawback is that known dispenser machines must have high overall dimensions, due to the necessary presence of the tank for collecting the used capsules and for this reason they cannot be placed on desks in the event of wanting to make personal use of them.

A further drawback is that one type of drink, e.g., coffee, contained in a capsule, pollutes the contents of a capsule containing a different type of drink, e.g., tea, and which is used afterwards.

### OBJECTS OF THE INVENTION.

One object of the invention is to upgrade the state of the art.

Another object of the invention is to realise an apparatus, container and method for producing and consuming soluble drinks that makes the machines for preparing and dispensing soluble drinks more simple and compact.

A further object of the invention is to realise an apparatus, container and method for producing and consuming soluble drinks that allows avoiding any pollution between different drinks.

Another object of the invention is to realise an apparatus, container and method for producing and consuming soluble drinks that permits considerably reducing the components to be disposed of after use, thus considerably cutting the production costs of soluble drinks.

A further object of the invention is to develop an apparatus, container and method which allow making machines for the production and the dispensing of soluble drinks of compact dimensions, such as to allow these to also be placed in small areas, such as, for example, a corner of a desk, and to also be used in a personal way by an individual user.

According to one aspect of the invention, an apparatus for producing and consuming soluble drinks is provided comprising a dispensing device for dispensing a solvent liquid for dissolving doses of powdered soluble drinks; a container of said doses of soluble drinks to be dissolved, characterised by the fact that said container comprises connection means with said dispensing device and collection means for collecting a dissolved drink accessible from outside, in such a way as to consume said dissolved drink directly from said container.

According to a further aspect of the invention, a container for producing and consuming soluble drinks is provided characterized by the fact that it comprises: a containment body; a first containment compartment of at least one dose of soluble drinks to be dissolved defined in said body; an inlet obtained in said first containment compartment for the introduction of a solvent liquid dispensed by a dispensing device; a second collection compartment of a dissolved drink, open and accessible from the outside, defined in said body separately from said first compartment and connectable to this by connection means, said second compartment allowing a user to drink said dissolved drink directly from said container.

According to another aspect of the invention, a method for producing and consuming soluble drinks is provided, comprising the following phases: arranging in a first compartment of a container a dose of powdered soluble drink; introducing into said first compartment a solvent liquid in such a way as to dissolve inside this said dose and obtain a dissolved drink ready to drink; dispensing said dissolved drink; characterized by the fact that after said dispensing the collection is envisaged of said dissolved and dispensed drink in a second compartment of said container, separated from said first compartment and accessible from the outside, in such a way as to be able to drink said dissolved drink directly from said second compartment.

The apparatus, the container and the method for producing and consuming soluble drinks thus permit preparing and dispensing soluble drinks which are collected directly in the same container containing the doses of powdered soluble drinks to be dissolved and from which the dissolved drinks can be drunk directly.

### BRIEF DESCRIPTION OF THE DRAWINGS

Further characteristics and advantages will appear more evident from the description of an embodiment of an apparatus and a container for producing and consuming soluble drinks, illustrated indicatively by way of non limiting example in the accompanying drawings, wherein:
Figure 1 is a very schematic and cross section view of an apparatus for producing and consuming soluble drinks;
Figure 2 is a very schematic cross section and interrupted view of a second embodiment of an apparatus for producing and consuming soluble drinks;
Figure 3 is a very schematic cross section and interrupted view of a third embodiment of an apparatus for producing and consuming soluble drinks;
Figure 4 is a cross section interrupted view of a detail of the apparatus of Figure 1;
Figure 5 is a cross section interrupted view of a second embodiment of the detail of the apparatus of Figure 1;

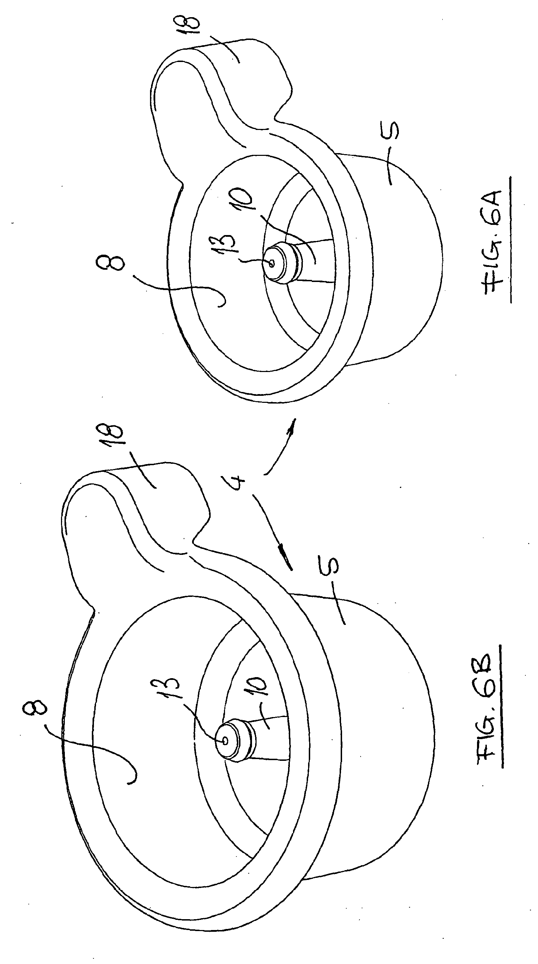

Figure 6A is a perspective view of a container of doses of soluble drinks with small dimensions and from which a dissolved drink can also be drunk;
Figure 6B is a perspective view of a container of doses of soluble drinks with bigger dimensions and from which a dissolved drink can also be drunk.

### EMBODIMENTS OF THE INVENTION.

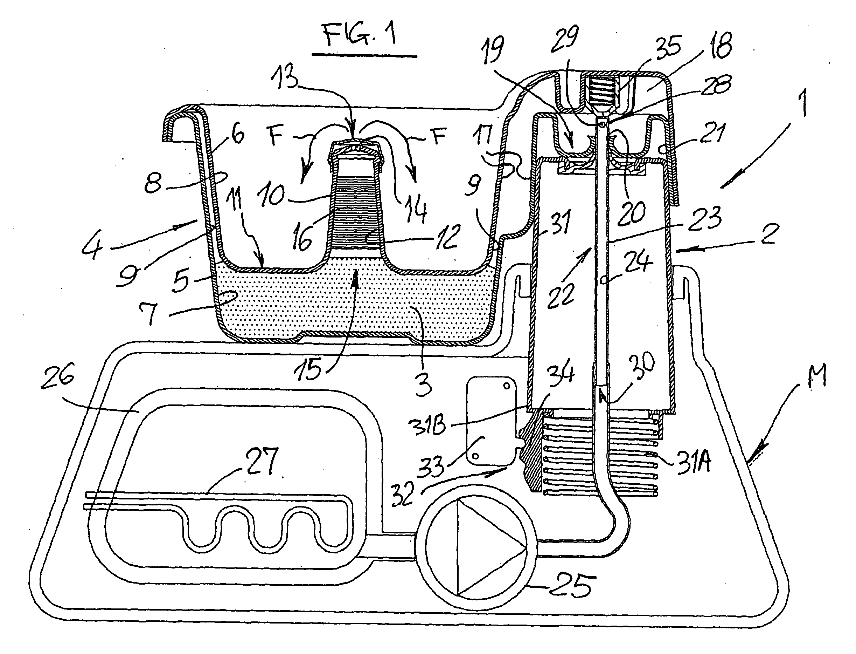

With special reference to the Figure 1, a first embodiment is shown of an apparatus for producing and consuming soluble drinks, indicated by 1 and hereinafter briefly indicated as apparatus 1.

The apparatus 1 comprises a dispensing device 2 for dispensing a solvent liquid, normally water, which is mounted on an automatic dispenser machine "M" for dissolving doses 3 of powdered soluble drinks previously arranged inside a container 4. The container 4 is formed of two shells, respectively a first outer shell 5 and a second inner shell 6 that can be positioned inside the first outer shell 5.

Both the first outer shell 5, and the second inner shell 6 are preformed, in such a way as to form a first compartment 7 and a second compartment 8 respectively.

Furthermore, as can be seen in the Figure 1, between the side walls of the first outer shell 5 and the second inner shell 6 an inter-space 9 is defined that forms connection means for connecting the first compartment 7 to the dispensing device 2, described in detail below.

The second inner shell 6 forms, in a substantially central area, a path that places in mutual communication the first compartment 7 and the second compartment 8 and which, in this embodiment of the apparatus 1, is made like a duct element 10 that elevates from a bottom wall 11 of the second compartment 8.

The duct element 10 has a longitudinal cavity 12 and defines a first extremity 13 turned towards the inside of said second compartment 8 which has an outlet opening 14 and an opposite second open extremity 15 turned towards the first compartment 7 and communicating with this.

Inside the duct element 10 a filter 16 is fitted that is designed to filter the dissolved drinks during their transit along the longitudinal cavity 12 to be collected inside the second compartment 8.

The connection means connecting the first compartment 7 with the dispensing device 2 comprise a duct defined in the inter-space 9 and indicated by 17 which is obtained in a handle 18 which is part of the container 4, and a coupling part 19 meant to be coupled with the dispensing device 2, as described below, which has a coupling opening 20 normally seal-closed with laminar perforable means, such as, e.g., a sheet of aluminium.

In the handle 18, the coupling element 19 forms an overturned hollow seat 21 meant to receive inside it perforating means 22 for perforating the previously described aluminium sheet, when the container 4 is coupled with the dispensing device 2 in a dispensing configuration of solvent liquid, in this specific case hot water under pressure.

For this reason, the hollow seat 21 is shaped in such a way as to couple with the perforating means 22 and guide them during coupling.

The perforating means 22 comprise a stem member 23 which axially has a cavity 24 and which is connected to a pump 25 comprised in the dispensing device 2; the pump 25 is in turn connected to a tank 26 meant to contain a reserve of water to be heated, e.g., by means of a heating element 27 fitted inside the tank 26, and to be sent on request to the container 4 to dissolve a dose 3 of soluble drink.

The stem member 23 defines a first perforation extremity 28 meant to perforate said laminar perforable means and having a dispensing opening 29, and an opposite extremity 30 that is connected to the pump 25.

On the stem member 23 is fitted, sliding along this, a cursor 31, which moves along the stem member 23 pushed at an extremity by the coupling element 19, the position of which can vary according to the dimensions or to the capacity of the container 4, when the latter is coupled with the dispensing device 2 and at the opposite extremity by elastic contrast means, such as, for example, a spring 31A.

On the cursor 31 are fitted starting and stopping means 32 for starting and stopping the pump 25.

These starting and stopping means 32 can comprise, e.g., a microswitch 33 which can be operated with an eccentric body 34 fitted on the cursor 31, more specifically on an outer surface 31B of this, in such a way that the sliding movements along the stem member 23 start or stop the pump 25.

Inside the handle 18 an elastic shutter 35 is also fitted meant to be pressed by the stem member 23 when the container 4 is coupled with the dispensing device 2 and, instead, to stretch itself and occupy the coupling opening 20, when the container 4 is separated from the dispensing device 2: this way dripping is prevented through this coupling opening 20 when the extremity 28 is extracted.

In this first embodiment of the apparatus 1, the container 4 has a substantially round shape and is shaped like a cup which, as previously said, can be of different dimensions according to the type of drink it contains; the first compartment 7 and the second compartment 8 are, therefore, superimposed on one another as can be seen in the Figure 1.

The duct element 10 has, at the first extremity 13, the outlet opening 14 which can have different embodiments.

In a first embodiment it is envisaged that the opening 14 be obtained directly at the first extremity 13 like a simple hole.

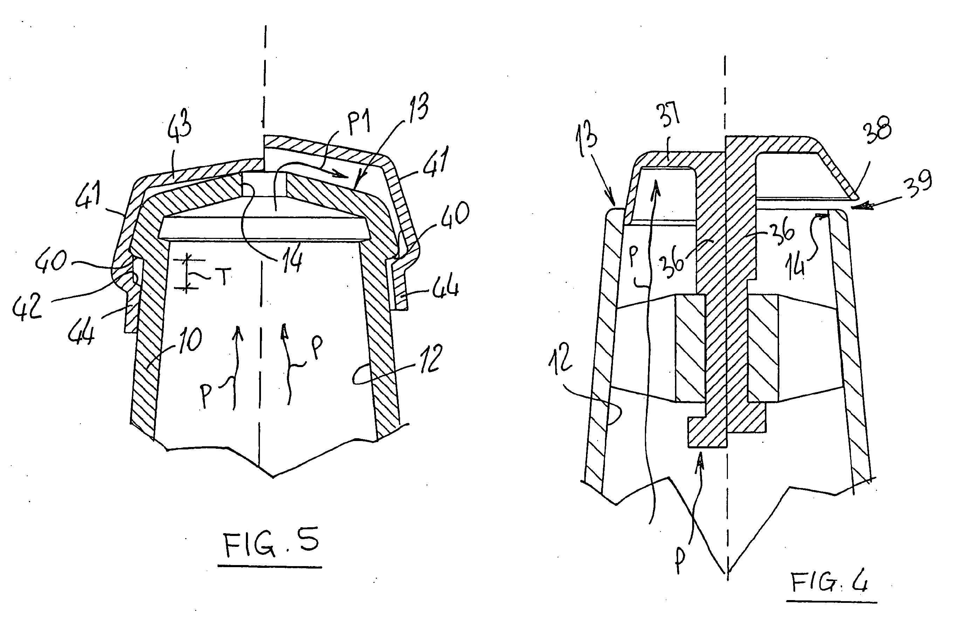

In a second embodiment shown in the Figure 4, the opening 14 substantially occupies all the first extremity 13 and inside the duct element 10 a sliding cap 36 is arranged which has a head 37 which peripherally has an elastic edge 38 which, normally, is kept in forced-seal position against the inner walls of the outlet opening 14.

when the sliding cap 36 moves outwards, pushed by the pressure indicated by the arrows "P" produced by the dissolved drink which rises through the longitudinal cavity 12 due to the gradual increase in pressure generated inside the first compartment 7, determined by the introduction of hot water under pressure, the elastic edge 38 moves beyond the edge of the outlet opening 14 and enlarges outwards, creating an annular passage 39 through which the dissolved drink comes out to be collected inside the second compartment 8.

In a third embodiment shown in the Figure 5, it will be seen that the first extremity 13 of the stem member 10 shapes an annular edge 40 in relief outwards.

On the first extremity 13 a cover 41 is fitted that shapes, in substantial correspondence to its base, a series of parallel ribs 44 which between them define passages with profiles that form a further edge 42 in relief towards the inside, which has a profile joined with that of the edge 40.

The relief edge 42 is obtained at a distance from an upper wall 43 of the cap 41 such as to allow the free sliding of the latter for a section "T" along the stem member 10, before the edges 40 and 42 come into contact with each other.

In cross section, both the edges 40 and 42 show rounded borders, so as to facilitate the start of overriding of the edge 42 over the edge 40.

The sliding of the cap 41, in this case too, is caused by the pressure "P" produced by the dissolved drink which rises through the longitudinal cavity 12.

When the edge 42 starts to override the edge 40 due to the pressure thrust on the cap 41, it dilates slightly outwards and the dissolved drink can flow through the passages defined between the ribs 44, and be collected in the second compartment 8, ready to be drunk.

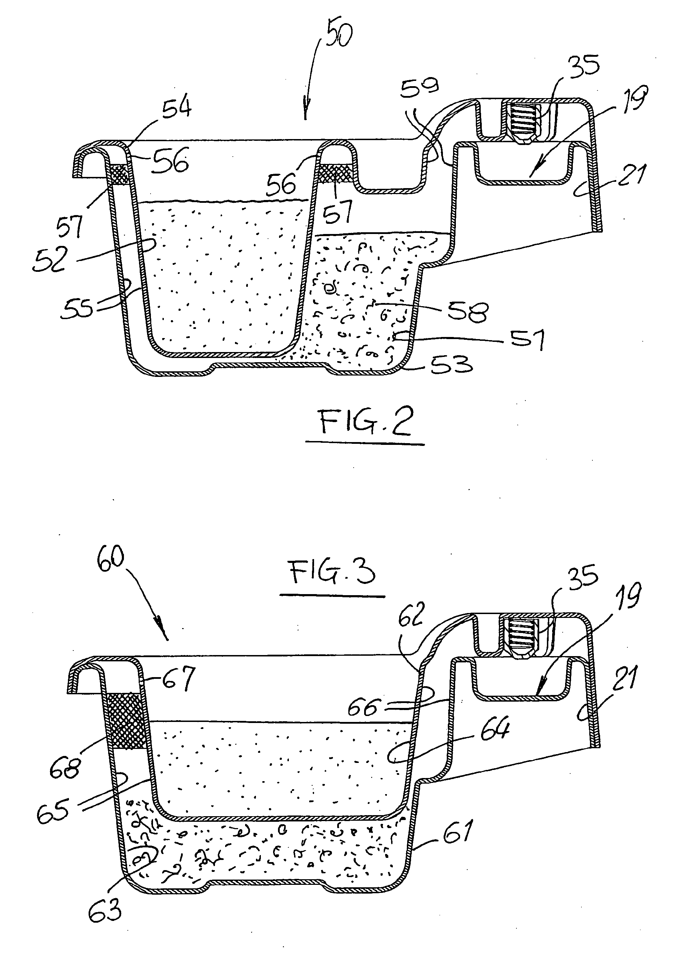

With reference to the Figures 2 and 3 two further embodiments will be seen of the container 4, indicated by the numbers 50 and 60 respectively. In particular, in the version shown in the Figure 2, it will be seen that a first compartment 51 and a second compartment 52 are arranged side by side and defined in a first shell 53 and in a second shell 54 respectively.

In this second embodiment as well, between the first shell 53 and the second shell 54 an inter-space 55 is defined that communicates with the inside of the second compartment 52 through openings 56 upstream of which, filters 57 are fitted.

Inside the first compartment 51 a dose 58 is placed of a powdered drink and a duct 59 connects it to the dispensing device 2.

With particular reference to the Figure 3, it will be seen that the container 60 is substantially similar to the container 4 in its first embodiment.

In fact, the container 60 is again composed of an outer shell 61 and of an inner shell 62 which shape a first compartment 63 and a second compartment 64 respectively.

Between the outer shell 61 and the inner shell 62 is again defined an inter-space 65 and a duct 66 connecting the first compartment 63 to the dispensing device 2.

In the inner shell 62 an outlet opening 67 of the dissolved drinks is provided connecting the first compartment 63 to the second compartment 65 through the inter-space 65 and which is protected by a filter 68 located upstream.

The operation of the apparatus 1 for producing and consuming soluble drinks is the following: with reference to the first embodiment shown in Figure 1, when a container 4 is coupled with the dispensing device 2, the coupling element 19 rests and pushes against the cursor 31 which is forced to slide along the stem member 23 downwards, defeating the contrasting force of the spring 31A. The eccentric body 34 triggers the micro-switch 33 and the pump 25 starts to pump up hot water from the tank 26, conveying it to the container 4 through the longitudinal cavity 24 of the stem member 23 which, during the positioning of the container 4, i.e., more specifically, of the insertion of the hollow seat 21 of this on the perforating means 22, perforates with its own first extremity 28 the aluminium sheet that seal-closes the coupling opening 20.

At the same time, the perforation extremity 28 presses on the elastic shutter 35 keeping this raised off the coupling opening 20 and placing in communication the cavity 24 with the duct 17 and, therefore, with the first compartment 7.

The hot water under pressure is then pushed inside this where a dose 3 of a soluble powdered drink has been previously placed.

The hot water dissolves the powdered drink making it completely liquid and the pressure pushes it up along the duct element 10 until it reaches the outlet opening 14, filtered by the filter 16.

In the event of the opening 14 being made like a simple hole, the drink flows out of this according to the arrows "F" and collects inside the second compartment 8, ready to be drunk.

In the event of the outlet opening 14 being made as shown in the Figure 4, the pressure "P" of the dissolved drink rising along the duct element 10 pushes on the head 37 of the sliding cap 36 which lifts up until the elastic edge 38 goes beyond the surround of the outlet opening 14, opening up towards the outside and creating the annular passage 39, through which passes the dissolved drink in liquid state which is collected in the second compartment 8.

In the event of the outlet opening 14 being made as shown in the Figure 5, the pressure "P" of the dissolved drink pushes on the cap 43 moving it by the distance "T", so the edges 40 and 42 come into contact with each other.

As the thrust continues, the edge 42 tends to go beyond the edge 40, but to do this, the cap 41 must dilate slightly towards the outside and this dilation is enough to allow the passage of the dissolved drink between the ribs 44 and, therefore, for it to reach the outlet opening 14 and, from here, the second compartment 8 in which it is collected.

When the quantity of dissolved drink collected inside this reaches a value selected by the consumer, the operation of the pump 25 is interrupted; the spring 31A returns the cursor 31 upwards until the stem member 23 is completely covered.

The quantity of dissolved drink can be determined in various ways, such as, e.g., by means of a timer, or of a volume or weight detection device designed to detect the quantity of drinks collected inside the second compartment 8, or again automatically, by fitting onto the cursor 31 a microswitch 33 that couples with an eccentric body having several coupling positions, to each of which corresponds a pre-established volume of dispensable water, or again by simply separating the container 4 from the dispensing device 2.

The perforation extremity 28 is covered by the cursor 31 and the connection opening 20, no longer crossed by the perforation extremity 28, is closed by the elastic shutter 35 to prevent dripping.

The consumer can grip the handle 18 and pick up the container 4, separating it from the dispensing device 2, and drink the drink collected in the second compartment 8 directly from this.

Once the drink has been completely consumed, the container 4 is thrown away together with the empty dose of powdered drink still inside the first compartment 7.

The operation of the apparatus 1 is also the same in the embodiments shown in the Figures 2 and 3.

With reference to the Figure 2, the hot water under pressure reaches the first compartment 51 passing through the duct 59 and coming from the dispensing device 2 which remains unchanged with respect to what has been previously described.

Inside this first compartment 51, the dissolving occurs of the drink, which, due to the pressure "P", penetrates the inter-space 55 and reaches the outlet openings 56, after being filtered by the filters 57, and is then stored in the second compartment 52.

The user grips the container 50 and, after separating it from the dispensing device 2, can drink the drink directly from the container 50.

With reference to the Figure 3, the hot water under pressure coming from the pump (not shown) reaches the first compartment 63 of the container 60, passing through the duct 66.

When the dose of the drink contained in the first compartment 63 has completely dissolved, it is pushed towards the outlet opening 67, after being filtered by the filter 68, and after this is collected in the second compartment 64.

The user grips the container 60, separating it from the dispensing device 2, and can therefore drink directly from this.

## Claims

1. container for producing and consuming soluble drinks comprising: a containment body (4; 50; 60); a first containment compartment (7; 51; 63) of at least one dose (3; 58) of soluble drinks to be dissolved defined in said containment body (4; 50; 60); an inlet (17; 59; 66) obtained in said first containment compartment (7; 51; 63) for the introduction of a solvent liquid dispensed by a dispensing device (2); a second collection compartment (8; 52; 64) of a dissolved drink, defined in said containment body (4; 50; 60) separately from said first compartment (7; 51; 63) and connectable to this by connection means (10; 55; 65), **characterized in that** said second collection compartment (8; 52; 64) is open and accessible from the outside in such a way to allow a user to drink said dissolved drink directly from said container (4; 50; 60), said containment body comprising coupling means (19) with said dispensing device (2), in such a way as to receive said solvent liquid when said coupling means (19) couple with said dispensing device (2), said coupling means comprising a coupling opening (20) normally closed with laminar pierceable means; a concave seat (21) defined around said coupling opening (20) and meant to receive a corresponding perforating (23) and dispensing element of said dispensing device (2).

2. Container according to claim 1, wherein it comprises connection means (17, 18, 35) designated to be connected to a dispensing device (2) of a solvent liquid for dissolving said at least one dose (3; 58) and collection means (8;52;64) for collecting a dissolved drink accessible from the outside, in such a way as to consume said dissolved drink directly from said container (4; 50; 60).

3. Container according to claim 2, wherein from said first compartment (7; 51; 63) towards said second compartment (8; 52; 64) a one-way connection path is defined.

4. Container according to claim 3, wherein said connection path (9; 55; 65) has filtering means (16; 57; 68) to filter said dissolved drinks between said first compartment (7; 51; 53) and said second compartment (8; 52; 64).

5. Container according to claim 1 , wherein said container (4; 50; 60) comprises: a first outer shell (5; 53; 61) that shapes said first compartment (7; 51; 63) and a second inner shell (6; 54; 62) that shapes said second compartment (8; 52; 64), that can be arranged inside said first outer shell (5; 53; 61), between said first compartment (7; 51; 63) and said second compartment (8; 52; 64) said connection means being defined (10; 14; 39; 56; 67).

6. Container according to claim 5, wherein said first compartment (7; 51; 63) and second compartment (8; 52; 64) are substantially superimposed on one another.

7. Container according to claim 5, wherein said first compartment (7; 51; 63) and second compartment (8; 52; 64) are substantially arranged side by side.

8. Container according to claim 2 or 6, wherein said one-way connection path comprises a duct element (10) elevating from a bottom wall (11) of said second compartment (8), having a longitudinal cavity (12) and defining a first extremity (13) turned towards the inside of said second compartment (8) which has an outlet opening (14) and an opposite second open extremity (15) turned towards said first compartment (7).

9. Container according to claim 3 or 7, wherein said connection path comprises an inter-space (9; 55; 65) defined between said first compartment (7; 51; 63) and second compartment (8; 52; 64) and having outlet openings (14; 39; 56; 67) towards the inside of said second compartment (8; 52; 64).

10. Container according to claim 5, wherein said first shell and second shell comprise a first preformed shell (5; 53; 61) and a second preformed shell (6; 54; 62) joined together with joining means.

11. container according to claim 5, wherein said connection means comprise: a connection duct (17; 59; 66) defined between said first shell (5; 53; 61) and second shell (6; 54; 62), having an extremity communicating with said first compartment (7; 51; 63) and an opposite extremity; a coupling element (19) with said dispensing device (2), arranged at said opposite extremity and having a coupling opening (20) normally seal-closed with laminar pierceable means.

12. Method for producing and consuming soluble drinks, comprising the following phases: arranging in a first compartment (7; 51; 63) of a container (4; 50; 60) a dose of powdered soluble drink (3; 58); introducing into said first compartment (7; 51; 63) a solvent liquid in such a way as to dissolve inside this said dose (3; 58) and obtain a dissolved drink ready to drink; dispensing said dissolved drink; **characterized by** the fact that after said introducing, connecting said first compartment (7; 51; 63) to a second compartment (8; 52; 64) is provided, so that said dissolved and dispensed drink can be dispensed in said second compartment (8; 52; 64) of said container (4; 50; 60), in such a way as to be able to drink said dissolved drink directly from said second compartment (8; 52; 64).

## Patentansprüche

1. Behälter für das Erzeugen und den Verbrauch von löslichen Getränken mit:
einem Aufnahmegefäß (4, 50, 60), einem ersten Aufnahmebereich (7, 51, 63) für mindestens eine Dosierung (3, 58) löslicher Getränke, die dazu bestimmt sind, in dem Aufnahmegefäß (4, 50, 60) gelöst zu werden, einem Einlass (17, 59, 66), der vorgesehen ist in dem ersten Aufnahmebereich (7, 51, 63) für die Zufuhr einer löslichen Flüssigkeit, die von einer Ausgabevorrichtung (2) ausgegeben wird, einem zweiten Sammelbereich (8, 52, 64) für ein gelöstes Getränk, der vorgesehen ist in dem ersten Aufnahmegefäß (4, 60, 60) getrennt von dem ersten Aufnahmebereich (7, 51, 63) und verbunden mit diesem mittels Verbindungseinrichtungen (10, 55, 65), **dadurch gekennzeichnet, dass** der zweite Sammelbereich (8, 52, 64) offen ist und zugänglich von außen, so dass es einem Nutzer möglich ist, das gelöste Getränk direkt aus dem Behälter (4, 50, 60) zu trinken, wobei dieses Aufnahmegefäß Kupplungseinrichtungen (19) zu dieser Ausgabevorrichtung (2) aufweist, so dass das gelöste Getränk aufgenommen werden kann, wenn die Kupplungseinrichtungen (19) an die Ausgabevorrichtung (2) angekuppelt sind, wobei die Kupplungseinrichtungen eine Kupplungsöffnung (20) aufweisen, die normalerweise mit laminaren, durchdringbaren Mitteln geschlossen sind, einem konkaven Sitz (21), der um die Kupplungsöffnung (20) gebildet ist und dazu bestimmt sind ein entsprechendes, durchdringendes (23) und ausgebendes Element der Ausgabevorrichtung (2) aufzunehmen.

2. Behälter gemäß Anspruch 1, **dadurch gekennzeichnet, dass** Verbindungseinrichtungen (17, 18, 35) vorgesehen sind, die bestimmt sind mit einer Ausgabevorrichtung (2) für eine lösbare Flüssigkeit verbunden zu werden zur Auflösung der mindestens einen Dosierung (3; 58) und Sammeleinrichtungen (8, 52, 64) zum Sammeln eines von außen zugänglichen, gelösten Getränks, so dass dieses gelöste Getränk direkt aus dem Gefäß (4, 50, 60) verbraucht werden kann.

3. Behälter gemäß Anspruch 2, **dadurch gekennzeichnet, dass** aus dem ersten Bereich (7, 51, 63) zu dem zweiten Bereich (8, 52, 64) eine Verbindung in eine Richtung gebildet ist.

4. Behälter gemäß Anspruch 3, **dadurch gekennzeichnet, dass** der Verbindungsweg (9, 55, 65) Filtereinrichtungen (16, 57, 68) aufweist zum Filtern der gelösten Getränke zwischen dem ersten Bereich (7, 51, 53) und dem zweiten Bereich (8, 52, 64).

5. Behälter gemäß Anspruch 1, **dadurch gekennzeichnet, dass** das erste Gefäß (4, 50, 60) aufweist: eine erste äußere Schale (5, 53, 61), die den ersten Bereich (7, 51, 63) formt und eine zweite innere Schale (6, 54, 62), die den zweiten Bereich (8, 52, 64) formt, die innerhalb der ersten äußeren Schale (5, 53, 61) angeordnet werden kann zwischen dem ersten Bereich (7, 51, 63) und dem zweiten Bereich (8. 52, 64), so dass die Verbindungseinrichtungen (10, 14, 39, 56, 67) bestimmt sind.

6. Behälter gemäß Anspruch 5, **dadurch gekennzeichnet, dass** der erste Bereich (7, 51, 63) und zweite Bereich (8, 52, 64) im Wesentlichen übereinander auf einander gesetzt sind.

7. Behälter gemäß Anspruch 5, **dadurch gekennzeichnet, dass** der erste Bereich (7, 51, 63) und zweite Bereich (8, 52, 64) im Wesentlichen nebeneinander angeordnet sind.

8. Behälter gemäß Anspruch 2 oder 6, **dadurch gekennzeichnet, dass** die Verbindung in eine Richtung ein Führungselement (10) umfasst, das sich von einer Bodenwand (11) des zweiten Bereichs (8) erhebt mit einer longitudinalen Öffnung (12) und ein erstes Ende (13) bildend, das nach dem Inneren des zweiten Bereichs (8) gedreht ist, das eine Auslassöffnung (14) aufweist und ein gegenüber liegendes, zweites, offenes Ende (15), das zu dem ersten Bereich (7) gedreht ist.

9. Behälter gemäß Anspruch 3 oder 7, **dadurch gekennzeichnet, dass** die Verbindung in eine Richtung einen Zwischenraum (9, 55, 65) aufweist, der zwischen dem ersten Bereich (7, 51, 63) und zweite Bereich (8, 52, 64) gebildet ist und Auslassöffnungen (14, 39, 56, 67) nach dem Inneren des zweiten Bereichs (8; 52; 64) hat.

10. Behälter gemäß Anspruch 5, **dadurch gekennzeichnet, dass** die erste Schale und zweite Schale eine erste vorgeformte Schale (5, 53, 61) und eine zweite vorgeformte Schale (6, 54, 62) aufweisen, die mit Verbindungseinrichtungen verbunden sind.

11. Behälter gemäß Anspruch 5, **dadurch gekennzeichnet, dass** die Verbindungseinrichtungen aufweisen: eine Verbindungsleitung (17, 59, 66), die gebildet ist zwischen der ersten Schale (5, 53, 61) und zweiten Schale (6, 54, 62) mit eine Ende, das verbunden ist mit dem ersten Bereich (7, 51, 63) und einem gegenüber liegenden Ende, einem Verbindungselement (19) zu der Ausgabevorrichtung (2), das an dem gegenüber liegenden Ende angeordnet ist und mit einer Kupplungsöffnung (20), die normalerweise versiegelt ist mit laminaren, durchdringbaren Mitteln.

12. Verfahren für das Erzeugen und den Verbrauch von löslichen Getränken mit den folgenden Schritten: Anordnen in einem ersten Aufnahmebereich (7, 51, 63) eines Aufnahmegefäßes (4, 50, 60) eine pulvrige, lösliche Getränkedosierung (3, 58), Einführen in den ersten Bereich (7, 51, 63) eine lösliche Flüssigkeit, so dass die Dosierung (3, 58) darin gelöst wird und ein gelöstes Getränk erhalten wird, das zum getrunken werden bereit ist, Ausgießen des gelösten Getränks, **dadurch gekennzeichnet, dass** nach dem Einführen der erste Bereich (7, 51, 63) mit dem zweiten Sammelbereich (8, 52, 64) verbunden ist, so dass das gelöste und ausgegebene Getränk in den zweiten Bereich (8, 52, 64) des Behälters (4, 50, 60) ausgegeben werden kann, so dass es möglich ist das gelöste Getränk direkt aus dem zweiten Bereich (8, 52, 64) zu trinken.

## Revendications

1. Récipient pour la production et la consommation de boissons solubles, comprenant: un corps de confinement (4 ; 50 ; 60) ; un premier compartiment (7 ; 51 ; 63) pour le confinement d'au moins une dose (3 ; 58) de boissons solubles à dissoudre, défini dans ledit corps de confinement (4; 50 ; 60) ; un orifice d'entrée (17; 59; 66) obtenu dans ledit premier compartiment de confinement (7 ; 51 ; 63) pour l'introduction d'un liquide solvant distribué par un dispositif de distribution (2); un deuxième compartiment (8 ; 52 ; 64) pour la récupération d'une boisson dissoute, défini dans ledit corps de confinement (4 ; 50 ; 60), séparément dudit premier compartiment (7 ; 51 ; 63) et pouvant être raccordé à ce dernier par des moyens de raccordement (10 ; 55 ; 65), **caractérisé en ce que** ledit deuxième compartiment de récupération (8 ; 52 ; 64) est ouvert et accessible depuis l'extérieur, de façon à permettre à un utilisateur de boire ladite boisson dissoute directement à partir dudit récipient (4 ; 50 ; 60), ledit corps de confinement comprenant des moyens (19) pour le couplage audit dispositif de distribution (2), de façon à recevoir ledit liquide solvant lorsque lesdits moyens de couplage (19) se couplent audit dispositif de distribution (2), lesdits moyens de couplage comprenant une ouverture de couplage (20) normalement fermée avec des moyens laminaires perforables ; un siège concave (21) étant défini autour de ladite ouverture de couplage (20) et étant destiné à recevoir un élément de perforation (23) et de distribution correspondant dudit dispositif de distribution (2).

2. Récipient selon la revendication 1, lequel comprend des moyens de raccordement (17, 18, 35) conçus pour être raccordés un dispositif de distribution (2) d'un liquide solvant pour dissoudre ladite au moins une dose (3 ; 58) et des moyens de récupération (8 ; 52 ; 64) pour la récupération d'une boisson dissoute, accessibles depuis l'extérieur, pour permettre la consommation de ladite boisson dissoute directement à partir dudit récipient (4 ; 50 ; 60).

3. Récipient selon la revendication 2, dans lequel un chemin de raccordement unidirectionnel est défini dudit premier compartiment (7 ; 51 ; 63) vers ledit deuxième compartiment (8 ; 52 ; 64).

4. Récipient selon la revendication 3, dans lequel ledit chemin de raccordement (9 ; 55 ; 65) possède des moyens de filtrage (16 ; 57 ; 68) pour filtrer lesdites boissons dissoutes entre ledit premier compartiment (7 ; 51 ; 53) et ledit deuxième compartiment (8 ; 52 ; 64).

5. Récipient selon la revendication 1, dans lequel ledit récipient (4 ; 50 ; 60) comprend : une première coque externe (5 ; 53 ; 61) qui donne sa forme audit premier compartiment (7 ; 51 ; 63) et une deuxième coque interne (6 ; 54 ; 62) qui donne sa forme audit deuxième compartiment (8 ; 52 ; 64), et qui peut être disposée à l'intérieur de ladite première coque externe (5 ; 53 ; 61), lesdits moyens étant définis (10 ; 14 ; 39 ; 56 ; 67) entre ledit premier compartiment (7 ; 51 ; 63) et ledit deuxième compartiment (8 ; 52 ; 64).

6. Récipient selon la revendication 5, dans lequel ledit premier compartiment (7 ; 51 ; 63) et ledit deuxième compartiment (8 ; 52 ; 64) sont essentiellement superposés l'un sur l'autre.

7. Récipient selon la revendication 5, dans lequel ledit premier compartiment (7 ; 51 ; 63) et ledit deuxième compartiment (8 ; 52 ; 64) sont disposés essentiellement l'un à côté de l'autre.

8. Récipient selon la revendication 2 ou 6, dans lequel ledit chemin de raccordement unidirectionnel comprend un élément de conduite (10) s'élevant depuis une paroi de fond (11) dudit deuxième compartiment (8), ayant une cavité longitudinale (12) et définissant une première extrémité (13) tournée vers l'intérieur dudit deuxième compartiment (8), qui a une ouverture de sortie (14), et une deuxième extrémité ouverte opposée (15) tournée vers ledit premier compartiment (7).

9. Récipient selon la revendication 3 ou 7, dans lequel ledit chemin de raccordement comprend un espace intermédiaire (9 ; 55 ; 65) défini entre ledit premier compartiment (7 ; 51 ; 63) et ledit deuxième compartiment (8 ; 52 ; 64) et ayant des ouvertures de sortie (14 ; 39 ; 56 ; 67) dirigées vers l'intérieur dudit deuxième compartiment (8 ; 52 ; 64).

10. Récipient selon la revendication 5, dans lequel ladite première coque et ladite deuxième coque comprennent une première coque préformée (5 ; 53 ; 61) et une deuxième coque préformée (6 ; 54 ; 62) liées l'une à l'autre par des moyens de liaison,

11. Récipient selon la revendication 5, dans lequel lesdits moyens de raccordement comprennent : un conduite de raccordement (17 ; 59 ; 66) définie entre ladite première coque (5 ; 53 ; 61) et ladite deuxième coque (6 ; 54 ; 62), ayant une extrémité communiquant avec ledit premier compartiment (7 ; 51 ; 63) et une extrémité opposée ; un élément (19) pour le couplage audit dispositif de distribution (2), disposé au niveau de ladite extrémité opposée et ayant une ouverture de couplage (20) normalement fermée de façon étanche par des moyens laminaires perforables.

12. Procédé pour la production et la consommation de boissons solubles, comprenant les phases suivantes, consistant à : disposer dans un premier compartiment (7 ; 51 ; 63) d'un récipient (4 ; 50 ; 60) une dose de boisson en poudre soluble (3 ; 58) ; introduire un liquide solvant dans ledit premier compartiment (7 ; 51 ; 63) de façon à y dissoudre ladite dose (3 ; 58) et obtenir une boisson dissoute prête à boire ; distribuer ladite boisson dissoute; **caractérisé par le fait que**, après ladite introduction, il est prévu de raccorder ledit premier compartiment (7 ; 51 ; 63) à un deuxième compartiment (8 ; 52 ; 64), de telle sorte que ladite boisson dissoute et distribuée puisse être distribuée dans ledit deuxième compartiment (8 ; 52 ; 64) dudit récipient (4 ; 50 ; 60), de façon que ladite boisson dissoute puisse être bue directement à partir dudit deuxième compartiment (8 ; 52 ; 64).
